# FASCICULE DE BREVET EUROPEEN

(11) **EP 2 317 221 B1**
(45) Date de publication et mention de la délivrance du brevet: **21.02.2018**
(21) Numéro de dépôt: 10189329.5
(22) Date de dépôt: 28.10.2010
(51) Int. Cl.: F23C 9/00

(54) **CHAUDIÈRE A COMMUNICATION AÉRAULIQUE ENTRE LA CHAMBRE DE COMBUSTION ET L'ÉCHANGEUR PERMETTANT D'ÉVITER LA RÉSONANCE DU BRÛLEUR À AIR PULSÉ**
HEIZKESSEL MIT LUFTVERBINDUNG ZWISCHEN DER BRENNKAMMER UND DEM WÄRMETAUSCHER, MIT DER DIE RESONANZ DES GEBLÄSEBRENNERS VERHINDERT WERDEN KANN
BOILER WITH AIR COMMUNICATION BETWEEN THE COMBUSTION CHAMBER AND THE EXCHANGER, AVOIDING THE RESONANCE OF THE BLOWN-AIR BURNER

(30) Priorité: 30.10.2009 FR 0905227
(43) Date de publication de la demande: 04.05.2011
(73) Titulaire: De Dietrich Thermique, 67580 Mertzwiller (FR)
(72) Inventeur: Keusch, Jean-Jacques, 67240 Schirrhoffen (FR)
(74) Mandataire: Merckling, Norbert

(56) Documents cités:
- EP-A1- 0 250 604
- EP-A1- 1 544 541
- EP-A2- 0 387 859
- DE-A1- 2 918 565
- DE-A1- 2 927 193
- DE-A1- 3 140 821
- DE-A1- 3 601 000
- DE-A1- 4 205 316
- DE-A1- 4 304 057
- JP-A- 55 134 210

## Description

La présente invention se rapporte à une chaudière à foyer vertical et à brûleur à air soufflé comportant une communication aéraulique de fuite entre la chambre de combustion et l'échangeur de chaudière pour éviter ou du moins amoindrir très fortement la résonance vibratoire et acoustique du brûleur.

Des chaudières à foyer vertical et à brûleur à air soufflé sont décrites par les documents DE3601000 et DE2927193.

Les brûleurs à air soufflé des chaudières provoquent lors de leur fonctionnement des vibrations plus ou moins importantes, variables en fonction de la puissance calorifique dissipée et du régime de fonctionnement.

Les chaudières à chambre de combustion et à échangeur concentrique notamment les chaudières à foyer vertical avec flamme verticale descendante et à brûleur à air soufflé, présentent dans certaines conditions de fonctionnement, des phénomènes de résonance vibratoire hautement désagréables sur le plan sonore mais aussi préjudiciables à la chaudière notamment à l'intégrité et au maintien de l'assemblage de ses différentes parties constitutives.

Outre les inconvénients mentionnés ci-dessus, il est fortement déconseillé et même préjudiciable de laisser un brûleur fonctionner dans des conditions de résonance pour des raisons de fiabilité, mais aussi de déréglage et ainsi de mauvaise combustion avec tous les inconvénients qu'elle peut entraîner.

Il a déjà été apporté diverses solutions pour éviter ou du moins réduire fortement la résonance.

Ainsi, on connaît une solution qui consiste à interposer en extrémité de la chambre de combustion un caisson ou un boîtier à parois souples ou en matière absorbante formant une caisse de résonance qui permet d'amortir fortement les vibrations et les phénomènes acoustiques.

Ce boîtier ou cette caisse est accordé(e) à la fréquence de résonance ou au voisinage de celle-ci et servant de charge acoustique adaptée, absorbe de façon satisfaisante ou déporte le phénomène de résonance.

Les inconvénients de ce type de solution concernent son prix élevé et l'encombrement de la caisse de résonance.

La présente invention se situe plus particulièrement mais non exclusivement, dans le domaine des chaudières à brûleur vertical, c'est-à-dire développant une flamme verticale et ceci classiquement vers le bas et à chambre de combustion verticale, circulaire, concentrique et fermée à sa base par une extrémité de renvoi.

La flamme s'étend le long de l'espace intérieur cylindrique de la chambre de combustion entourée de l'échangeur jusqu'à sa base ouverte à travers laquelle s'échappent les gaz de combustion et l'air chaud pour ressortir après passage le long de la surface extérieure de la paroi latérale de la chambre de combustion en haut au voisinage de la tête du brûleur dans un compartiment de renvoi. Ce compartiment de renvoi a pour but de diriger le flux aéraulique chaud vers le bas, le long de l'échangeur de chaudière. Sa paroi latérale intérieure entoure la base du brûleur située en partie supérieure de la chambre de combustion.

Selon l'invention, on prévoit dans la paroi latérale d'une chambre annulaire attenante à la chambre de combustion et ouverte sur celle-ci à son extrémité ou dans la partie supérieure de la chambre de combustion, une pluralité d'ouvertures de faible section par exemple régulièrement réparties, destinées à établir une communication aéraulique de fuite entre la chambre de combustion et l'extrémité à ce niveau de l'échangeur de chaudière.

Cette communication est de faible section totale c'est-à-dire à petit débit tel un débit de fuite. Elle représente une communication de dérivation de faible valeur engendrant une contre-pression qui équilibre la pression à ce niveau, mais ne perturbe pas le fonctionnement général ni de la chaudière ni du brûleur, notamment la qualité de la combustion et le rendement thermique de la chaudière.

Cette communication de dérivation placée à l'extrémité supérieure de la chambre de combustion autour de la base du brûleur, suffit à supprimer ou du moins à amoindrir très fortement le phénomène de résonance du brûleur rencontré dans certaines conditions de fonctionnement.

La présence de ce faible court-circuit aéraulique assure une décompression minimale dynamique de la chambre de combustion et donc un équilibrage de la pression qui permet d'éviter toute résonance sur la plage des différentes puissances utilisées dans le domaine du chauffage domestique et semi-industriel.

D'autres caractéristiques et avantages de l'invention apparaîtront dans la description qui suit, donnée à titre d'exemple et accompagnée des dessins dans lesquels :
- la figure 1 est une vue en coupe longitudinale d'une chaudière à flamme verticale en position debout, pourvue de la communication aéraulique de fuite selon l'invention avec visualisation par des flèches du trajet des gaz de combustion,
- la figure 2 est une vue schématique en perspective d'un exemple de réalisation de la partie supérieure d'une chaudière à flamme verticale montrant les ouvertures de communication aéraulique d'équilibrage de la pression,
- la figure 3 est une vue schématique en perspective de la surface latérale de la partie supérieure de la chambre de combustion présentant des ouvertures de communication aéraulique de fuite en forme de chatières,
- la figure 4 est une coupe schématique en long selon la ligne IV-IV de la figure 3 d'une ouverture communication en forme de chatière.

On décrira ci-après à titre d'exemple le cas d'une chaudière à foyer vertical, mais l'invention peut s'étendre à différents types de chaudières à brûleur à air soufflé dans la mesure où les caractéristiques essentielles de l'invention s'appliquent.

Une chaudière 1 à foyer vertical 2 comporte en partie supérieure, un brûleur 3 à air soufflé (représenté que partiellement) monté sur une paroi supérieure 4. Ce brûleur 3 projette sa flamme 5 verticalement vers le bas le long d'une chambre de combustion 6 verticale par exemple de forme générale cylindrique.

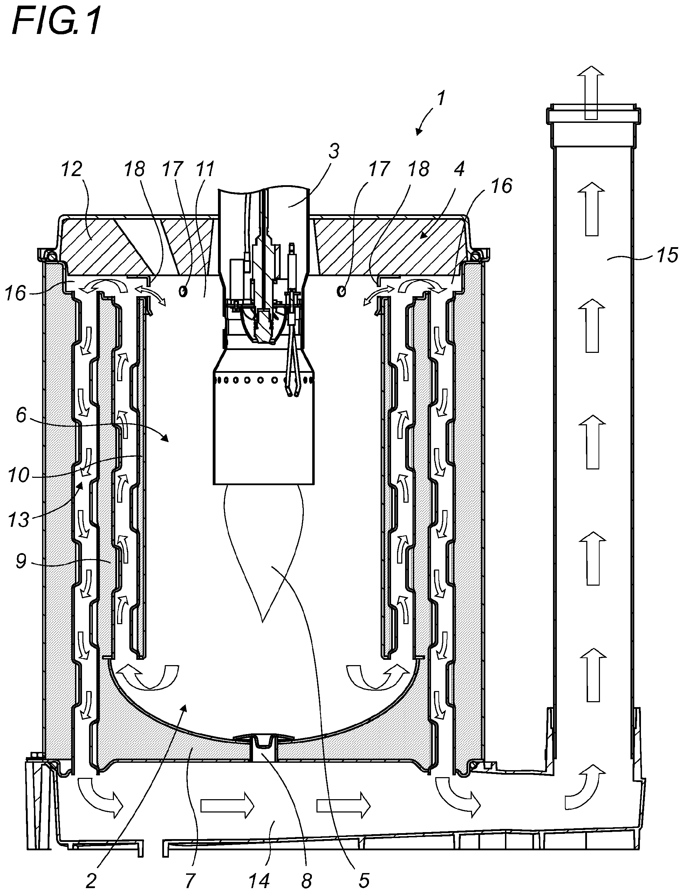

L'extrémité supérieure de la chambre de combustion 6 se trouve en partie supérieure de la figure 1.

Le volume cylindrique intérieur de la chambre de combustion 6 est fermé à son extrémité inférieure par l'intermédiaire d'une structure transversale formant un fond 7 conformé intérieurement en cuvette à orifice central de vidage 8. Les gaz de combustion et l'air chaud sortent de la chambre de combustion 6 en périphérie de celle-ci et remontent le long d'un échangeur de chaudière 9 concentrique à la chambre de combustion 6.

La chambre de combustion 6 est délimitée par une surface latérale cylindrique 10 qui se termine dans sa partie supérieure par un espace de communication aéraulique par exemple une chambre annulaire 11 d'équilibrage de la pression se développant autour de la base du brûleur 3 et obturée dans sa partie supérieure par une paroi transversale d'extrémité supérieure 12. Cette chambre annulaire 11 d'équilibrage de la pression est ouverte vers le bas c'est-à-dire qu'elle débouche à pleine ouverture dans la chambre de combustion 6.

Cette chambre annulaire 11 est constituée dans la version de base par la partie supérieure de la chambre de combustion 9.

Elle peut bien entendu, se présenter différemment par exemple, être délimitée vers le bas par une couronne.

La chambre de combustion 6 est entourée de façon coaxiale par l'échangeur de chaudière 9. Celui-ci peut présenter différentes formes techniques. Il peut s'agir d'une structure en chicanes 13 sur le trajet du flux aéraulique chaud associée à une structure tubulaire en anneau double ou triple sur toute la hauteur de la chambre de combustion 6. Cet échangeur de chaudière 9 débouche en ce qui concerne son entrée en partie inférieure de la chambre de combustion 6 et en ce qui concerne sa sortie dans un compartiment collecteur 14 pouvant servir de condenseur pour la condensation de l'air chaud et des gaz de combustion avant leur évacuation dans la cheminée par une conduite de raccordement 15.

Ainsi qu'il est représenté sur la figure 1, les gaz de combustion et l'air chaud sortent de la chambre de combustion 6 autour et à la périphérie de son fond 7 pour remonter dans l'échangeur le long de sa surface latérale proche de la chambre de combustion 6.

Le flux aéraulique chaud est ensuite renvoyé vers le bas dans une deuxième partie ou un deuxième étage de l'échangeur de chaudière 9 par un compartiment annulaire de renvoi 16 délimitant un espace concentrique qui ferme la partie supérieure de l'échangeur de chaudière 9. Ce compartiment de renvoi est délimité, par la paroi supérieure 4, par l'enveloppe extérieure de la chaudière et par la paroi latérale extérieure de la chambre annulaire 11 d'équilibrage de la pression.

Sur l'exemple représenté, le compartiment annulaire de renvoi 16 entoure la chambre 11 d'équilibrage de la pression et possède avec elle une paroi latérale commune, mais de façon générale, il peut simplement être attenant à celle-ci.

Il existe selon l'invention deux trajets du flux aéraulique chaud, visualisé par des flèches, à savoir le trajet montant et le trajet descendant représentant respectivement le premier et le deuxième étage de l'échangeur de chaudière. Le compartiment de renvoi 16 est situé entre la sortie du premier étage et l'entrée du deuxième étage. Il constitue la liaison entre ces deux étages.

Après avoir fourni la quasi totalité de sa chaleur à l'échangeur de chaudière 9, le flux aéraulique sort à température modérée en partie basse de la chaudière 1 après avoir traversé le compartiment bas servant de collecteur 14 et pouvant servir de condenseur.

Bien entendu, l'invention s'applique également aux chaudières sans module de condensation et de façon générale, à toutes les chaudières à brûleur à air soufflé dont le fonctionnement engendre une résonance sur sa plage de fonctionnement.

A titre d'exemple supplémentaire, entre la chambre annulaire 11 d'équilibrage de la pression et le compartiment de renvoi 16 peut être ménagée une chambre annulaire tampon (non représentée) concentrique au compartiment de renvoi 16. Cette chambre tampon joue le rôle d'interface entre la chambre 11 d'équilibrage de la pression et le compartiment de renvoi 16. Selon la conformation générale circulaire et annulaire des différentes parties de la chaudière représentée et prise à titre d'exemple, le compartiment de renvoi 16 entoure la chambre annulaire tampon. Cette dernière communique latéralement avec la chambre 11 d'équilibrage de la pression d'une part avec le compartiment de renvoi 16 et d'autre part avec la chambre 11 d'équilibrage de la pression.

Selon l'invention, on réalise une communication aéraulique de dérivation directe ou indirecte entre la chambre d'équilibrage 11 ou la partie supérieure de la paroi latérale de la chambre de combustion et le compartiment de renvoi 16 qui est situé à l'entrée de la deuxième partie de l'échangeur de chaudière 9.

Cette communication aéraulique est de section réduite et à faible débit que l'on peut qualifier de fuite. Elle peut prendre différentes formes techniques.

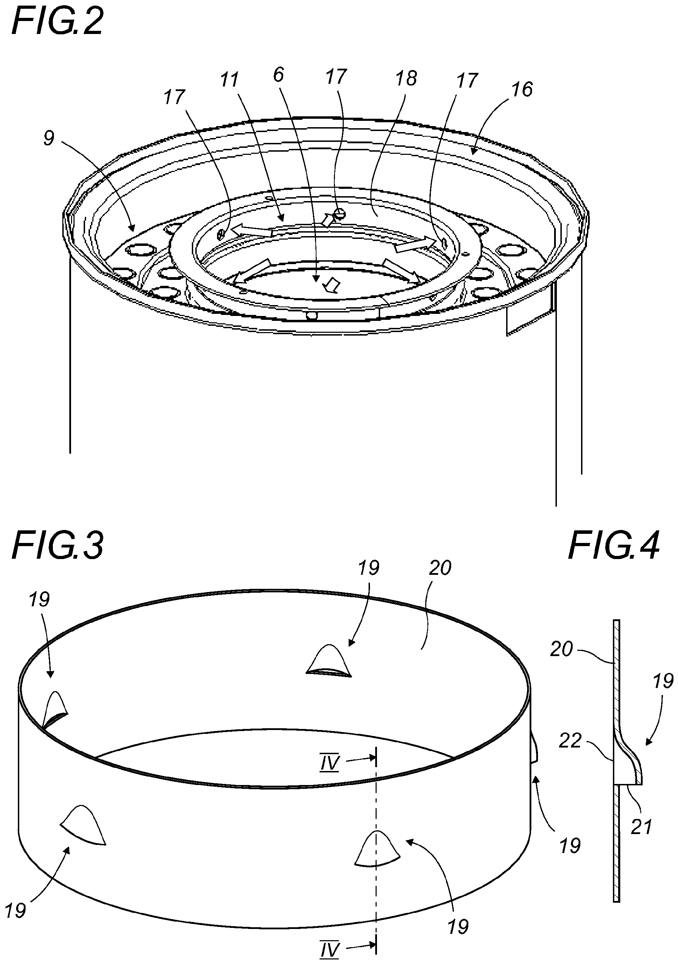

Sur la figure 2 on a représenté à titre d'exemple une solution technique simple. Il s'agit d'ouvertures telles que 17 par exemple, mais non exclusivement de forme circulaire, prévues dans la paroi latérale 18 de la chambre 11 d'équilibrage de la pression. Ces ouvertures sont de faible section et par exemple régulièrement réparties sur toute la paroi 18 de surface latérale de la chambre 11 d'équilibrage de la pression ou sur une pièce de paroi latérale circulaire et concentrique délimitant en périphérie un espace supérieur en communication avec le compartiment de renvoi 16 et plus généralement avec une extrémité de l'échangeur de chaudière 9.

Bien entendu, cette pièce de paroi latérale 18 peut se confondre avec la partie supérieure de la paroi latérale de la chambre de combustion 6.

La simple présence de ces ouvertures 17 de communication aéraulique permet de supprimer ou du moins d'amoindrir très fortement le phénomène de résonance du brûleur dans les zones critiques de fonctionnement en faisant communiquer entre elles des zones de pressions différentes le long du parcours des gaz de combustion. Ainsi, on empêche la formation d'une onde stationnaire de résonance.

On a représenté sur les figures 3 et 4 une autre forme de réalisation des ouvertures 17 de communication aéraulique.

Il s'agit d'ouvertures 17 en forme de chatières 19 connues pour les combles ou les toits par des tuiles présentant une ouverture de ventilation de cette forme. Ces ouvertures peuvent être formées par des crevés dans la surface latérale d'un corps cylindrique ou virole 20 en tôle comme visible sur la figure 3. Ces ouvertures présentent un capot 21 en saillie de la surface latérale du corps cylindrique 20 délimitant à leur base une ouverture de sortie 21 de section perpendiculaire à la surface latérale du corps cylindrique 20 communiquant avec un passage 22 dans la surface latérale de ce corps cylindrique résultant du dégagement de matière lié à la formation de ces ouvertures en chatière 19.

Comme indiqué précédemment, ces ouvertures en chatière 19 sont de faible section et par exemple uniformément réparties et en nombre limité, de manière à ne représenter en totalité qu'un débit de fuite.

## Revendications

1. Chaudière à foyer vertical (2) et à brûleur (3) à air soufflé comprenant une chambre de combustion (6) entourée par un échangeur de chaudière (9), à deux parties correspondant à deux passages à l'extrémité desquels se trouve un compartiment de renvoi (16) formant la structure de renvoi par le haut entre le premier passage où s'effectue le trajet montant et le second passage où s'effectue le trajet descendant des gaz de combustion et de l'air chaud provenant de la chambre de combustion dans laquelle se développe la flamme du brûleur (3) situé dans la partie supérieure de la dite chambre de combustion, ce compartiment de renvoi couvrant les extrémités supérieures des deux parties de l'échangeur de chaudière (9), **caractérisée par** des ouvertures de communication aéraulique de fuite dans la partie latérale haute de la chambre de combustion entre le compartiment de renvoi (16) et la chambre de combustion (6), afin d'éviter ou du moins d'amoindrir fortement la résonance acoustique du brûleur (3).

2. Chaudière selon la revendication 1 **caractérisée en ce que** la chaudière est une chaudière à condensation.

3. Chaudière selon la revendication 1 **caractérisée par** une chambre annulaire (11) d'équilibrage de la pression attenant au compartiment de renvoi (16) et située à l'extrémité de la chambre de combustion (6) où se trouve le brûleur (3).

4. Chaudière selon la revendication précédente **caractérisée en ce que** la chambre (11) d'équilibrage de la pression est la partie supérieure de la chambre de combustion (6).

5. Chaudière selon la revendication 3 ou 4 **caractérisée en ce que** la chambre (11) d'équilibrage de la pression entoure la base du brûleur (3).

6. Chaudière selon la revendication 4 ou 5 **caractérisée en ce que** le compartiment de renvoi (16) entoure la chambre (11) d'équilibrage de la pression située à l'extrémité de la chambre de combustion (6).

7. Chaudière selon la revendication précédente **caractérisée en ce que** la chambre annulaire (11) d'équilibrage de la pression située à l'extrémité de la chambre de combustion (6) est ouverte sur celle-ci.

8. Chaudière selon l'une quelconque des revendications 3 à 6 **caractérisée en ce que** le compartiment de renvoi (16) et la chambre annulaire (11) d'équilibrage de la pression ont une paroi latérale commune.

9. Chaudière selon l'une quelconque des revendications 3 à 7 **caractérisée** en ce en ce qu'il existe une chambre tampon entre le compartiment de renvoi (16) et la chambre (11) d'équilibrage de la pression.

10. Chaudière selon l'une quelconque des revendications 3 à 7 **caractérisée en ce que** la communication aéraulique entre la chambre de combustion (6) et l'échangeur de chaudière (9) est au moins un passage à travers la paroi latérale (18) de la chambre (11) d'équilibrage de la pression.

11. Chaudière selon la revendication 3 **caractérisée en ce que** la communication aéraulique est réalisée sous la forme de plusieurs ouvertures (17) dans la paroi latérale (18) de la chambre (11) d'équilibrage de la pression.

12. Chaudière selon la revendication précédente **caractérisée en ce que** les ouvertures (17) sont régulièrement réparties.

13. Chaudière selon la revendication précédente **caractérisée en ce que** les ouvertures (17) sont circulaires.

## Patentansprüche

1. Heizkessel mit vertikalem Feuerraum (2) und Gebläsebrenner (3) mit einer Brennkammer (6) umgeben von einem Heizkessel-Wärmetauscher (9) mit zwei Teilen, die zwei Passagen entsprechen, an deren Enden sich eine Rückführungskammer (16) befindet, die die Rückführungsstruktur von oben bildet, zwischen der ersten Passage, wo Verbrennungsgase und Warmluft sich aufwärts bewegen und der zweiten Passage, wo sie sich abwärts bewegen, welche aus der Brennkammer strömen, in der sich die Flamme des Brenners (3) entwickelt, der sich im oberen Teil dieser Brennkammer befindet, diese Rückführungskammer, die die oberen Enden der beiden Teile des Heizkessel- Wärmetauscher (9) abdeckt, ist **gekennzeichnet durch** lufttechnische Auslass- Verbindungsöffnungen im seitlichen oberen Teil der Brennkammer (6) zwischen der Rückführungskammer (16) und der Brennkammer (6) zur Vermeidung oder zumindest starker Verminderung der akustischen Resonanz des Brenners (3).

2. Heizkessel nach Anspruch 1, **dadurch gekennzeichnet, dass** es sich bei dem Heizkessel um einen Brennwertkessel handelt.

3. Heizkessel gemäß Anspruch 1, **gekennzeichnet durch** eine Ringkammer (11) zum Druckausgleich angrenzend an die Rückführungskammer (16) und angeordnet am Ende der Brennkammer (6), wo sich der Brenner (3) befindet.

4. Heizkessel gemäß dem vorhergehenden Anspruch, **dadurch gekennzeichnet, dass** die Ringkammer (11) zum Druckausgleich den oberen Teil der Brennkammer (6) bildet.

5. Heizkessel gemäß Anspruch 3 oder 4, **dadurch gekennzeichnet, dass** die Ringkammer (11) zum Druckausgleich die Basis des Brenners (3) umgibt.

6. Heizkessel gemäß Anspruch 4 oder 5, **dadurch gekennzeichnet, dass** die Rückführungskammer (16) die Ringkammer (11) um Druckausgleich umgibt, die am Ende der Brennkammer (6) angeordnet ist.

7. Heizkessel gemäß dem vorhergehenden Anspruch, **dadurch gekennzeichnet, dass** die Ringkammer (11) zum Druckausgleich, die am Ende der Brennkammer (6) angeordnet ist, zu dieser hin offen ist.

8. Heizkessel gemäß irgendeinem der Ansprüche 3 bis 6
**dadurch gekennzeichnet, dass** die Rückführungskammer (16) und die Ringkammer (11) zum Druckausgleich eine gemeinsame Seitenwand haben.

9. Heizkessel gemäß irgendeinem der Ansprüche 3 bis 7, **dadurch gekennzeichnet, dass** zwischen der Rückführungskammer (16) und der Ringkammer (11) zum Druckausgleich eine Pufferkammer vorhanden ist.

10. Heizkessel gemäß irgendeinem der Ansprüche 3 bis 7, **dadurch gekennzeichnet, dass** die lufttechnische Kommunikation zwischen der Brennkammer (6) und dem Heizkessel- Wärmetauscher (9) mindestens eine Passage durch die Seitenwand (18) der Ringkammer (11) zum Druckausgleich darstellt.

11. Heizkessel gemäß Anspruch 3, **dadurch gekennzeichnet, dass** die lufttechnische Verbindung in Form mehrerer Öffnungen (17) in der Seitenwand (18) der Ringkammer (11) zum Druckausgleich ausgeführt ist.

12. Heizkessel gemäß dem vorhergehenden Anspruch, **dadurch gekennzeichnet, dass** die Öffnungen (17) gleichmäßig verteilt sind.

13. Heizkessel gemäß dem vorhergehenden Anspruch, **dadurch gekennzeichnet, dass** die Öffnungen (17) ringförmig sind.

## Claims

1. Boiler with vertical hearth (2) and blown-air burner (3), incorporating a combustion chamber (6), surrounded by a heat exchanger (9) with two parts, corresponding to two passages at the end of which there is a return compartment (16) forming the return structure at the top between the first passage, where the upward journey occurs, and the second passage for the downward journey of the combustion gases and hot air from the combustion chamber in which the burner flame (3) burns, located in the upper part of the said combustion chamber, with this return compartment covering the upper ends of the two parts of the boiler heat exchanger (9), **characterized by** leakage air flow openings in the upper lateral part of the combustion chamber between the return compartment (16) and the combustion chamber (6), so as to prevent or at least greatly lessen the acoustic resonation from the burner (3).

2. Boiler according to claim 1, **characterized in that** the boiler is a condensation boiler.

3. Boiler according to claim 1, **characterized by** a ring-shaped chamber (11) for balancing the pressure at the return compartment (16), located at the end of the combustion chamber (6) where the burner is located (3).

4. Boiler according to the preceding claim, **characterized in that** the pressure balancing chamber (11) is the upper part of the combustion chamber (6).

5. Boiler according to claims 3 or 4, **characterized in that** the pressure balancing chamber (11) surrounds the base of the burner (3).

6. Boiler according to claims 4 or 5, **characterized in that** the return chamber (16) surrounds the pressure balancing chamber (11) located at the end of the combustion chamber (6).

7. Boiler according to the preceding claim, **characterized in that** the ring-shaped pressure balancing chamber (11) located at the end of the combustion chamber (6) opens onto it.

8. Boiler according to any of claims 3 to 6, **characterized in that** the return chamber (16) and the ring-shaped pressure balancing chamber (11) have a common side wall.

9. Boiler according to any of claims 3 to 7, **characterized in that** there is a buffer chamber between the return compartment (16) and the pressure balancing chamber (11).

10. Boiler according to any of claims 3 to 7, **characterized in that** the air flow between the combustion chamber (6) and the boiler heat exchanger (9) is at least one passage through the side wall (18) of the pressure balancing chamber (11).

11. Boiler according to claim 3, **characterized in that** the air flow is carried out in the form of multiple openings (17) in the side wall (18) of the pressure balancing chamber (11).

12. Boiler according to the preceding claim, **characterized in that** the openings (17) are regularly distributed.

13. Boiler according to the preceding claim, **characterized in that** the openings (17) are circular.
